# FASCICULE DE BREVET EUROPEEN

(11) **EP 2 934 959 B1**
(45) Date de publication et mention de la délivrance du brevet: **17.06.2020**
(21) Numéro de dépôt: 13805936.5
(22) Date de dépôt: 17.12.2013
(51) Int. Cl.: B60S 1/48, B60S 1/52

(54) **SYSTEME DE DISTRIBUTION DE LIQUIDE LAVE-GLACE POUR BALAIS D'ESSUIE-GLACE DE VEHICULE AUTOMOBILE**
SYSTEM ZUR VERTEILUNG EINER WASCHFLÜSSIGKEIT FÜR SCHEIBENWISCHER BEI KRAFTFAHRZEUGEN
SYSTEM FOR DISTRIBUTING WASHER FLUID FOR MOTOR VEHICLE WINDSCREEN WIPERS

(30) Priorité: 18.12.2012 FR 1262277
(43) Date de publication de la demande: 28.10.2015
(73) Titulaire: Valeo Systèmes d'Essuyage, 78322 Le Mesnil Saint Denis (FR)
(72) Inventeur: JARASSON, Jean-Michel, F-78321 Le Mesnil Saint Denis (FR); IZABEL, Vincent, F-91380 Chilly Mazarin (FR); CAILLOT, Gérald, F-78720 Cernay La Ville (FR)
(74) Mandataire: Valeo Systèmes d'Essuyage
(86) Numéro de dépôt international: PCT/EP2013/077009
(87) Numéro de publication internationale: WO 2014/095945

(56) Documents cités:
- DE-A1- 3 925 038
- FR-A1- 2 971 471
- US-A1- 2012 167 327
- US-A1- 2012 192 375

## Description

La présente invention est relative à un système de distribution de liquide lave-glace pour balais d'essuie-glace de véhicule automobile dans lequel le liquide lave-glace est réchauffé/dégelé avant d'être projeté sur la surface vitrée du véhicule automobile. L'invention s'applique plus particulièrement à un système de distribution de liquide lave-glace pour balais d'essuie-glace à deux rampes d'arrosage permettant de réchauffer le raccord hydraulique du système de distribution de liquide lave-glace.

Le document FR2971471 A1 décrit un dispositif de distribution de liquide-lave glace pour balais d'essuie-glace de véhicule automobile dans lequel le liquide lave-glace est réchauffé/dégivré avant d'être projeté sur la surface vitrée du véhicule automobile.

De manière connue, le balai d'essuie-glace comporte deux rampes d'arrosage pourvues d'un ou d'une multitude de gicleurs ou orifices d'arrosage sous pression, permettant la distribution du liquide lave-glace sur la surface vitrée. Les gicleurs sont alimentés en liquide lave-glace contenu dans un réservoir par l'intermédiaire d'une pompe.

Lorsque la température extérieure est trop basse, par exemple en dessous de 5°C, on réchauffe/dégèle le liquide lave-glace. Pour cela, une conduite de transport chauffante permet de dégeler et de maintenir le système de distribution de liquide lave-glace hors gel. Pour réaliser le réchauffage proprement dit du liquide lave-glace, on utilise un réseau de conduites de réchauffage et de transport, chaque conduite comportant un manchon extrudé de canaux de circulation et dans lequel des conducteurs électriques chauffants sont noyés dans la masse. Ainsi le liquide lave-glace est réchauffé et acheminé dans la conduite jusqu'au(x) gicleur(s) sans obstacle dans le canal de circulation du liquide lave-glace tout en limitant l'encombrement et le coût de la conduite.

Le réseau comporte une conduite principale sous-capot raccordée d'une part, à une pompe de liquide lave-glace du véhicule automobile et d'autre part, à deux conduites secondaires de balai d'essuie glace respectivement raccordées aux rampes d'arrosage des balais, via un raccord hydraulique. La conduite principale et le raccord hydraulique sont disposés sous le capot du véhicule automobile, c'est-à-dire dans le compartiment moteur du véhicule automobile, tandis que les conduites secondaires des balais d'essuie-glace sont intégrées dans les bras d'essuie-glace, principalement à l'extérieur du compartiment moteur.

On profite de cette zone de jonction entre la conduite principale sous-capot et les conduites secondaires des balais d'essuie-glace pour disposer le raccord hydraulique. Toutefois, cette zone de jonction crée une zone froide pouvant perturber la circulation du liquide lave-glace en cas de gel, voire la bloquer totalement.

Un des buts de la présente invention est de pallier à ces inconvénients en proposant un système distribution de liquide lave-glace pour balais d'essuie-glace de véhicule automobile amélioré, permettant d'éviter les zones froides à la jonction entre la conduite principale sous-capot et les conduites secondaires des balais d'essuie-glace, à faible coût et de faible encombrement. Un autre but de la présente invention est de proposer un procédé simple d'assemblage du dispositif de chauffe avec le système de distribution.

A cet effet, la présente invention a pour objet un système de distribution de liquide lave-glace pour balais d'essuie-glace de véhicule automobile comprenant :
- au moins un conduit de circulation du liquide,
- au moins un élément chauffant s'étendant le long dudit conduit, l'élément chauffant comprenant deux conducteurs chauffants distincts connectés l'un à l'autre de manière à former une boucle conductrice chauffante,
- au moins un raccord hydraulique connecté hydrauliquement audit conduit, un adaptateur thermo conducteur en contact avec ledit élément chauffant et disposé à une distance adaptée pour transmettre au moins une partie de la chaleur dudit adaptateur audit raccord hydraulique , l'adaptateur thermo conducteur comprend soit une bague thermo conductrice autour de laquelle est enroulée la boucle chauffante soit une languette thermo conductrice enrobant la boucle conductrice chauffante.

Un tel système permet de réchauffer efficacement le raccord hydraulique. D'une part en augmentant le transfert de chaleur entre l'élément chauffant et le raccord hydraulique et d'autre part en uniformisant ce transfert de chaleur sur le corps de raccord hydraulique. Ainsi on évite la formation de zones froides qui pourraient perturber la circulation du liquide lave-glace, et de points chauds qui pourraient endommager le raccord hydraulique.

Selon une ou plusieurs caractéristiques du système de distribution, prise seule ou en combinaison :
- la distance entre l'adaptateur thermo conducteur et le raccord hydraulique est de 0 à 5 millimètres, et est, de préférence, de 0 à 1 millimètre.
- l'adaptateur thermo conducteur comprend une portion de paroi épousant au moins une partie du corps dudit raccord hydraulique.
- les deux conducteurs chauffants sont en partie noyés dans la masse formant ledit conduit de circulation, ladite boucle conductrice chauffante s'étendant hors dudit conduit.
- la bague thermo conductrice est recouverte par un joint isolant au moins autour de la boucle chauffante.
- la languette thermo conductrice est réalisée à partir de résine thermo conductrice.
- un cache de protection recouvre l'adaptateur thermo conducteur ainsi qu'une paroi latérale du raccord hydraulique.
- le système de distribution comporte deux raccords hydrauliques.
- l'adaptateur thermo conducteur est disposé au niveau d'une zone de jonction des deux raccords hydrauliques.
- la bague thermo conductrice est emboîtée sur les corps des deux raccords hydrauliques au niveau de la zone de jonction.
- un support relie les deux raccords hydrauliques et la languette thermo conductrice est insérée entre les corps des deux raccords hydrauliques au niveau de la zone de jonction dans une cavité dudit support.
- le raccord hydraulique comprend un clapet anti-retour.

D'autres caractéristiques et avantages de l'invention ressortiront de la description suivante, donnée à titre d'exemple, sans caractère limitatif, en regard des dessins annexés sur lesquels :
- La figure 1 représente une vue schématique d'éléments d'un système de distribution de liquide lave-glace pour balai d'essuie-glace de véhicule automobile,
- la figure 2 représente une vue en coupe d'une conduite principale sous capot du système de distribution de la figure 1 ainsi que des éléments d'un dispositif de chauffe,
- la figure 3 représente une conduite principale sous-capot raccordée à deux raccords hydrauliques à la fin d'un procédé d'assemblage d'un premier mode de réalisation du dispositif de chauffe,
- la figure 4 représente un organigramme des différentes étapes du procédé d'assemblage du premier mode de réalisation du dispositif de chauffe,
- la figure 5 représente la conduite principale sous-capot assemblée à une bague thermo conductrice à la fin d'une deuxième étape du procédé d'assemblage du premier mode de réalisation du dispositif de chauffe,
- la figure 6 représente la bague thermo conductrice assemblée à un joint et à la conduite principale sous-capot à la fin d'une troisième étape du procédé d'assemblage du premier mode de réalisation du dispositif de chauffe,
- la figure 7a représente un premier raccord hydraulique assemblé à la bague thermo conductrice et à la conduite principale sous-capot pendant une quatrième étape du procédé d'assemblage du premier mode de réalisation du dispositif de chauffe,
- la figure 7b représente les deux raccords hydrauliques assemblés à la bague thermo conductrice et à la conduite principale sous-capot à la fin d'une quatrième étape du procédé d'assemblage du premier mode de réalisation du dispositif de chauffe,
- la figure 8 représente un cache de protection recouvrant les deux raccords hydrauliques à la fin d'une sixième étape du procédé d'assemblage du premier mode de réalisation du dispositif de chauffe,
- la figure 9 représente une vue en coupe de la conduite principale sous-capot raccordée à deux raccords hydrauliques et assemblée au dispositif de chauffe à la fin d'un procédé d'assemblage d'un deuxième mode de réalisation du dispositif de chauffe,
- la figure 10 représente le dispositif de chauffe selon le deuxième mode de réalisation assemblé à la conduite principale sous-capot,
- la figure 11 représente un organigramme des différentes étapes du procédé d'assemblage du deuxième mode de réalisation du dispositif de chauffe,
- la figure 12 représente les deux raccords hydrauliques maintenus ensemble par un support selon le deuxième mode de réalisation du dispositif de chauffe,
- la figure 13 représente le dispositif de chauffe aligné avec les deux raccords hydrauliques avant assemblage,
- la figure 14 représente le dispositif de chauffe assemblé aux raccords hydrauliques tel qu'obtenu au terme d'un procédé assemblage du deuxième mode de réalisation du dispositif de chauffe.

Sur ces figures, les éléments identiques portent les mêmes numéros de référence.

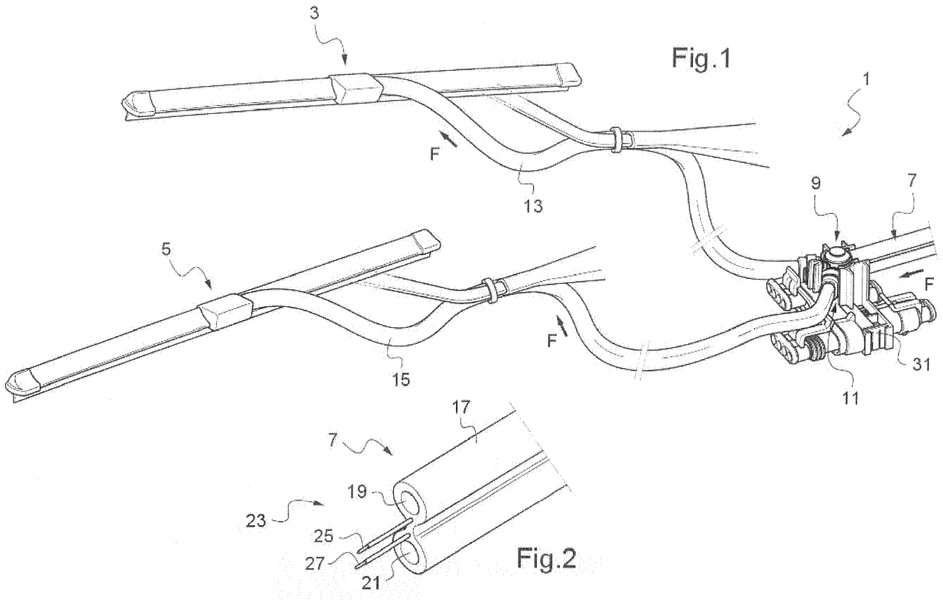

La figure 1 représente une vue schématique générale des éléments d'un système de distribution de liquide lave-glace 1, pour balais d'essuie-glace 3, 5 de véhicule automobile. Les figures ci-jointes représentent un système de distribution de liquide lave-glace 1 comprenant deux rampes d'arrosage, aussi appelé système de distribution bi rampe. Bien sur, il est tout à fait possible de n'avoir qu'une seule rampe d'arrosage, ce système est aussi appelé système de distribution mono rampe.

Selon une première variante, dite variante bi rampe, le système de distribution de liquide lave-glace 1 comprend deux rampes d'arrosage, ce système de distribution est appelé système de distribution bi rampe. Les balais d'essuie-glace 3, 5 à deux rampes présentent une rampe d'arrosage de chaque côté du bras du balai d'essuie-glace (non représenté), chaque rampe s'étendant selon la direction longitudinale du balai. De préférence, le liquide lave-glace est envoyé uniquement sur la partie avant du balai, c'est-à-dire que le liquide lave-glace est envoyé sur la rampe d'arrosage située du côté duquel le bras du balai d'essuie-glace avance pendant une phase montante du balayage et de l'autre côté pendant la phase descendante du balayage. Cet agencement permet d'essuyer instantanément le liquide lave-glace après son dépôt sur la surface vitrée, supprimant ainsi tout intervalle durant lequel la vision aurait pu être réduite.

Selon une deuxième variante (non illustrée), dite variante mono rampe, le système de distribution de liquide lave-glace 1 comprend une seule rampe d'arrosage, ce système de distribution est appelé système de distribution mono rampe.

Le système de distribution de liquide lave-glace 1 comporte une conduite principale sous-capot 7 destinée à être raccordée à une pompe de liquide lave-glace du véhicule automobile (non représentée), elle-même raccordée à un réservoir (non représenté), au moins un raccord hydraulique 9, 11 pour raccorder la conduite principale sous-capot 7 à des conduites secondaires de balai d'essuie-glace 13 et 15 respectivement raccordées aux rampes d'arrosage des balais d'essuie-glace 3, 5 du véhicule automobile. Selon la variante mono rampe, le système de distribution de liquide lave-glace 1 comporte un premier raccord hydraulique 9. Selon la variante bi rampe, le système de distribution de liquide lave-glace 1 comporte le premier raccord hydraulique 9 et un deuxième raccord hydraulique 11.

La conduite principale sous-capot 7 et le au moins un raccord hydraulique 9, 11 sont disposés sous le capot du véhicule automobile, c'est-à-dire dans le compartiment moteur, tandis que les conduites secondaires de balai d'essuie-glace 13, 15 sont disposées en partie à l'extérieur, intégrées dans les bras supportant les balais d'essuie-glace 3, 5 et reliées auxdits balais. Le au moins un raccord hydraulique 9, 11 est assemblé à un boîtier 31 du véhicule automobile, ce qui permet de le maintenir fixé dans le véhicule.

Dans l'exemple développé, le au moins un raccord hydraulique 9, 11 comprend au moins un clapet anti-retour. Le au moins un clapet anti-retour permet le passage du liquide pompé dans le sens de circulation allant de la pompe vers la rampe (voir les flèches F) et le blocage du retour du flux de liquide pompé dans l'autre sens, c'est-à-dire des balais vers la pompe. Le au moins un clapet anti-retour évite ainsi toute redescente de liquide des balais d'essuie-glace vers la pompe, notamment en phase d'arrêt de distribution de liquide dans un canal de circulation. Il est bien entendu possible d'utiliser d'autres types de raccord hydraulique, tels que des raccords hydrauliques en « T » ou en « Y ».

Comme on peut le voir sur la vue en coupe de la conduite principale sous-capot 7 en figure 2, selon la variante bi rampe, ladite conduite comporte un manchon 17 extrudé de deux canaux de circulation 19, 21. En outre, un dispositif de chauffe 23 est placé dans le manchon 17. Le dispositif de chauffe 23 comprend deux conducteurs chauffants 25, 27 noyés dans la masse du manchon 17. Dans l'exemple de réalisation représenté en figure 2, les conducteurs chauffants sont alignés au centre entre les canaux de circulation 19, 21. Les conducteurs chauffants 25, 27 et les canaux de circulation 19, 21 sont longitudinalement sensiblement parallèles entre eux.

Selon la variante mono rampe, le manchon 17 comporte un seul canal de circulation.

Les conducteurs chauffants 25, 27 comportent par exemple un fil résistif chauffant de sorte que le liquide lave-glace prélevé dans le réservoir par la(s) pompe(s) vers la rampe d'arrosage respective est réchauffé.

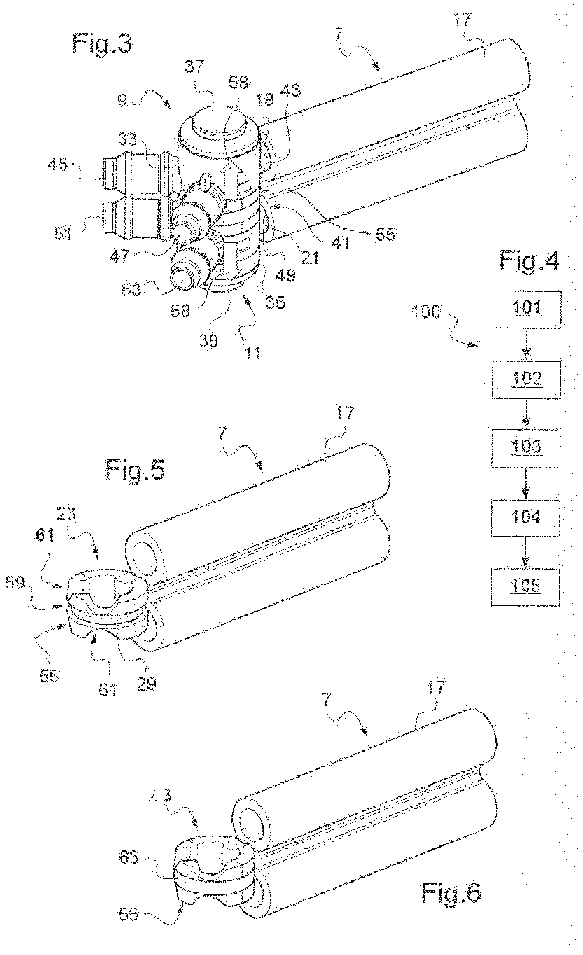

Les conducteurs chauffants 25, 27 sont connectés à une alimentation électrique côté pompe. De l'autre côté, c'est-à-dire côté raccord hydraulique 9, 11, les conducteurs chauffants 25, 27 sont connectés ensemble à l'aide de shunts (non représentés), ce qui permet de constituer une boucle conductrice chauffante 29 (représentée par exemple à la figure 5) fermant ainsi un circuit électrique de chauffe.

Le manchon 17 est en matériau souple, par exemple en caoutchouc. Les canaux de circulation 19, 21 du liquide lave-glace et les conducteurs chauffants 25, 27 sont obtenus par extrusion : les conducteurs chauffants 25, 27 sont introduits lors de l'extrusion du manchon.

Les conduites secondaires de balai d'essuie-glace 13, 15 (figure 1) sont de même principe que la conduite principale sous-capot 7. Elles comportent chacune un manchon extrudé d'un canal de circulation et deux conducteurs chauffants noyés dans la masse du manchon (non représenté).

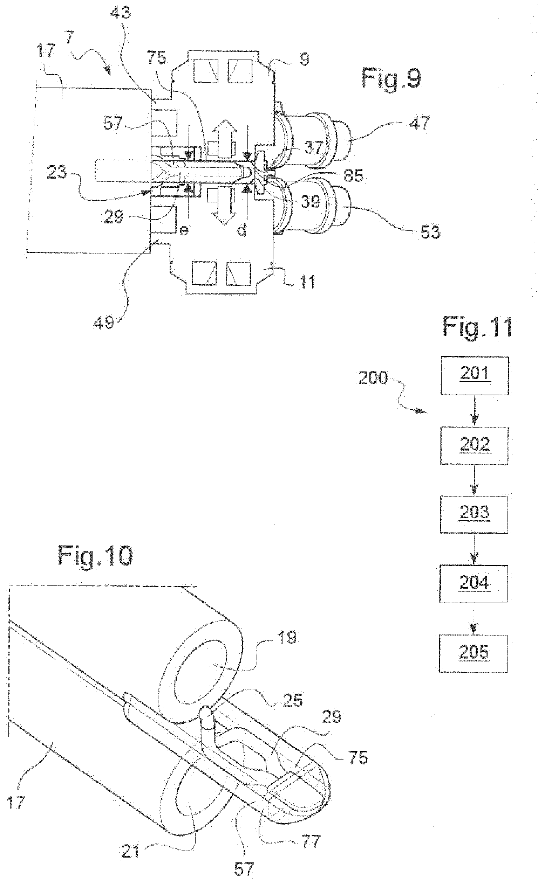

Le dispositif de chauffe 23 comprend en outre un adaptateur thermo conducteur 55 (l'adaptateur portant la référence 55 est visible sur les figures 3, 5, 6, 7a et 7b), 57 (l'adaptateur portant la référence 57 est visible sur les figures 9, 10 et 13) en contact d'une part avec la boucle chauffante 29 (voir figure 5) et d'autre part avec le au moins un raccord hydraulique 9, 11. L'adaptateur thermo conducteur 55, 57 présente une surface de contact uniforme avec le au moins un raccord hydraulique 9, 11.

L'adaptateur thermo conducteur 55, 57 est réalisé à partir de matériau permettant une bonne diffusion thermique. Les bonnes propriétés de diffusion thermique de l'adaptateur thermo conducteur 55, 57 permettent de diffuser efficacement la chaleur de la boucle conductrice 29 au au moins un raccord hydraulique 9, 11. Le transfert de chaleur entre l'adaptateur 55, 57 et le au moins un raccord hydraulique 9, 11 est représenté par les flèches 58. L'adaptateur thermo conducteur 55, 57 permet de transférer de la chaleur au le au moins un raccord hydraulique 9, 11 de manière uniforme, ainsi on évite la création de points chauds qui pourraient endommager le au moins un raccord hydraulique 9, 11. Par points chauds, on entend des zones dont la température est telle qu'elle peut endommager le au moins un raccord hydraulique 9, 11.

De façon avantageuse, l'adaptateur thermo conducteur 55, 57 peut présenter une paroi dont la forme épouse le(s) corps de(s) raccord(s) hydraulique(s), le contact entre l'adaptateur thermo conducteur 55, 57 et le au moins un raccord hydraulique 9, 11 est ainsi amélioré, ce qui permet encore d'augmenter le transfert de chaleur provenant de la boucle chauffante 29.

Comme on peut le voir sur la figure 3, chaque raccord hydraulique 9, 11 comporte un corps de raccord hydraulique de forme générale cylindrique réalisé en un matériau adapté pour résister aux températures de chauffage, par exemple en matériau plastique.

Les corps de premier raccord hydraulique 9 et de deuxième raccord hydraulique 11 présentent une paroi latérale 33, 35 et deux faces sensiblement circulaires 37, 39 (seule une face de chaque raccord hydraulique est visible). Les corps de raccord hydraulique peuvent être des éléments distincts. Ces éléments distincts peuvent s'assembler coaxialement. Dans ce cas, les faces 37, 39 de raccord hydraulique se retrouvent en vis-à-vis au niveau d'une zone de jonction 41. Les corps de raccord hydraulique peuvent aussi être réalisés en un seul tenant.

Le corps du premier raccord hydraulique 9 comporte une première entrée 43 raccordée au premier canal de circulation 19 de la conduite principale sous capot 7 et deux premières sorties 45, 47 destinées à raccorder des premiers canaux de circulation des conduites secondaires de balai d'essuie-glace 13 et 15. Le corps du deuxième raccord hydraulique 11 comporte une deuxième entrée 49 raccordée au deuxième canal de circulation 21 de la conduite principale sous-capot 7 et deux deuxièmes sorties 51, 53 destinées à raccorder des deuxièmes canaux de circulation des deux conduites secondaires de balai d'essuie-glace 13,15.

Les entrées 43, 49 et sorties 45, 47, 51, 53 des raccords hydrauliques 9, 11 comportent des connecteurs rapides. Les connecteurs rapides comportent des cannelures annulaires qui s'enfoncent dans les canaux de circulation des conduites pour être raccordés.

Selon la variante bi rampe, l'adaptateur thermo conducteur 55, 57 est situé au niveau de la zone de jonction 41 des deux raccords hydrauliques 9, 11. Selon un premier mode de réalisation, l'adaptateur thermo conducteur 55, 57 comprend une bague thermo conductrice 55. La bague thermo conductrice 55 est par exemple réalisée en métal, tel que de l'aluminium ou l'inox, ou bien encore en plastique thermo-conducteur.

Mieux visible sur la figure 5, selon la variante bi rampe la bague thermo conductrice 55 présente une paroi interne dont la forme épouse la forme des corps des raccords hydrauliques 9, 11 au niveau de la zone de jonction 41.

De plus, la bague thermo conductrice 55 présente une gorge périphérique de positionnement 59 permettant de recevoir la boucle chauffante 29. La boucle chauffante 29 peut présenter un ou plusieurs enroulements autour de la bague thermo conductrice 55.

La bague thermo conductrice 55 comprend en outre des ouvertures 61 pour le passage des entrées 43, 49 et des sorties 45, 47, 51, 53 du au moins un raccord hydraulique 9, 11.

La bague thermo conductrice 55 est maintenue à la conduite principale sous capot 7 par exemple par la boucle conductrice 29, par des clips ou bien encore par des moyens de serrage (non représentés).

Le système de distribution 1 peut comporter un isolant thermique couvrant la bague thermo conductrice 55. L'isolant thermique comporte par exemple un joint isolant 63 (figure 6). Le joint isolant 63 encapsule la boucle chauffante 29 pour éviter le transfert de chaleur à des éléments extérieurs et pour la protéger physiquement d'une mauvaise manipulation qui pourrait alors totalement couper le chauffage de la conduite principale sous capot 7.

Le dispositif de chauffe 23 assemblé au système de distribution 1 selon le premier mode de réalisation et selon la variante bi rampe est représenté par la figure 3. Sur cette figure 3, les raccords hydrauliques 9, 11 sont emboîtés dans la bague thermo conductrice 55, une portion de la paroi interne de la bague est donc en contact avec chacun des corps de raccords hydrauliques. Les entrées 43, 49 sont raccordées aux canaux de circulation 19, 21 de la conduite principale sous capot 7.

En cours d'utilisation, dans un premier sens du balai d'essuie-glace, par exemple dans une phase montante du balayage, la pompe distribue le liquide lave-glace dans le premier canal de circulation 19 de la conduite principale sous-capot 7, puis dans les premiers canaux de circulation des conduites secondaires des balais d'essuie-glaces 3, 5 et alimente les premières rampes d'arrosage des deux balais d'essuie-glace 3, 5 en liquide lave-glace contenu dans le réservoir via le premier raccord hydraulique 9 et la pompe. Quand le système de distribution est bi rampe, le deuxième canal de circulation 21 de la conduite principale sous-capot 7 alimente de même les deuxièmes rampes d'arrosage des deux balais d'essuie-glace 3, 5 en liquide lave-glace via le deuxième raccord hydraulique 11 et la pompe de manière à arroser le pare-brise lorsque les balais d'essuie-glace se déplacent dans un sens opposé. On peut utiliser une pompe bidirectionnelle ou deux pompes monodirectionnelles (non représentées) pour chaque rampe d'arrosage.

Les conducteurs chauffants 25, 27 chauffent le manchon 17 qui réchauffe à son tour le liquide lave-glace lors de son écoulement dans le au moins un canal de circulation 19, 21 entre la pompe et le au moins un raccord hydraulique 9, 11. La bague thermo conductrice 55 chauffe le corps du au moins un raccord hydraulique 9, 11, selon les flèches 58, ainsi on évite la formation d'une zone froide qui pourrait perturber la circulation du liquide lave-glace. Le réchauffage étant uniforme, on évite aussi la formation de points chauds qui pourraient endommager le au moins un raccord hydraulique 9, 11.

Selon une variante, l'isolant thermique du système de distribution 1 peut comporter une mousse ou une résine pour isoler thermiquement les zones réchauffées de l'extérieur afin d'améliorer la qualité du chauffage entre la bague thermo conductrice 55 et le corps du au moins un raccord hydraulique 9, 11, ce qui améliore la qualité du dégivrage. L'isolant thermique réalisé sous forme de résine permet de fixer la bague thermo conductrice 55 au corps du au moins un raccord hydraulique 9, 11. De plus, l'isolant thermique réalisé sous forme de résine permet aussi de coller les corps de raccords hydrauliques 9, 11 entre eux selon la variante bi rampe.

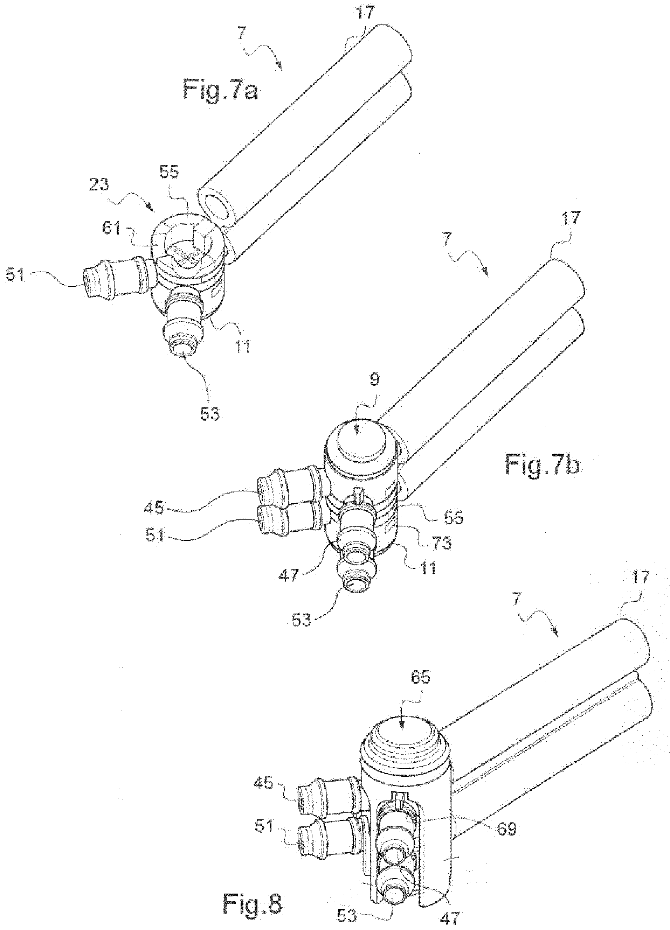

En outre, un cache de protection 65 peut être emboîté sur le corps du au moins un raccord hydraulique et la bague thermo conductrice 55 (figure 8).

Le cache de protection 65 permet de protéger physiquement la bague thermo conductrice 55 d'une mauvaise manipulation qui pourrait alors totalement couper le chauffage de la conduite principale sous-capot 7. Egalement, le cache de protection 65 permet de protéger toute personne d'un risque de brûlure lors d'une intervention sous le capot du véhicule. Le cache de protection 65 participe aussi au maintien de la bague thermo conductrice 55 au corps du au moins un raccord hydraulique 9, 11 dans les étapes de montage dans le boîtier 31 du véhicule automobile. Par ailleurs, le cache de protection 65 participe à l'amélioration de l'isolation thermique, ce qui augmente l'efficacité du chauffage.

Le cache de protection 65 peut comporter des moyens de retenue coopérant par emboîtage élastique avec le corps du au moins un raccord hydraulique 9, 11. Par exemple, le cache de protection 65 est en matériau plastique et présente une forme générale d'agrafe élastique se déformant élastiquement pour clipper les faces latérales des corps du au moins un raccord hydraulique 9, 11. Ainsi le cache de protection 65 présente des pattes pouvant comporter des ergots (non représentés) coopérant avec les cannelures des connecteurs rapides des entrées 43, 49 du au moins un raccord hydraulique 9, 11 pour fixer le cache de protection 65.

Le cache de protection 65 comporte en outre des ouvertures 69 pour le passage des entrées 43, 49 et sorties 45, 47, 51, 53 du au moins un raccord hydraulique 9, 11.

Au cours du procédé d'assemblage du dispositif de chauffe selon un premier mode de réalisation 100 (figure 4), on peut réaliser la succession d'étapes suivantes.

Dans une première étape 101, on connecte ensemble les deux conducteurs chauffants 25, 27 s'étendant hors du manchon 17 à l'aide de shunts. Ainsi, on réalise la boucle conductrice chauffante 29 qui ferme le circuit électrique du dispositif de chauffe 23.

Puis, dans une deuxième étape 102, représentée par la figure 5, on enroule la boucle conductrice chauffante 29 autour de la bague thermo conductrice 55 dans la gorge de positionnement 59 de la bague. La boucle conductrice chauffante 29 peut être enroulée une ou plusieurs fois autour de la bague thermo conductrice 55.

Dans une troisième étape 103, représentée par la figure 6, on positionne un joint 63 autour de la bague thermo conductrice 55 au moins autour de la boucle conductrice chauffante 29. On encapsule ainsi la boucle conductrice chauffante 29.

Dans une quatrième étape 104, selon la variante mono rampe on emboîte la bague thermo conductrice 55 dans le raccord hydraulique 9 au niveau d'une face 37 et on le raccorde au canal de circulation 19 de la conduite principale sous capot 7.

Selon la variante bi rampe, on emboîte la bague thermo conductrice 55 à un premier raccord hydraulique 9 ou 11 au niveau d'une face 37 ou 39 (figure 7a), puis on raccorde le premier raccord hydraulique 9 ou 11 à un canal de circulation 19 ou 21 de la conduite principale sous capot 7 via l'entrée 43 ou 49 du premier raccord hydraulique 9 ou 11. Puis on procède de même pour le deuxième raccord hydraulique 11 ou 9 (figure 7b). La bague thermo conductrice 55 est ainsi située au niveau de la zone de jonction 41 des deux raccords hydrauliques 9, 11.

Ensuite, dans une cinquième étape 105, on coule une résine sur la bague thermo conductrice 55 et le corps du au moins un raccord hydraulique pour couvrir la bague thermo conductrice 55. Ceci permet de maintenir la bague thermo conductrice 55 contre le corps de raccord hydraulique.

Puis dans une sixième étape , on emboîte le cache de protection 65 sur le corps du au moins un raccord hydraulique. Pour cela, on glisse les entrées 43, 49 et sorties 45, 47, 51, 53 du au moins un raccord hydraulique 9, 11 dans les ouvertures 69.

Alternativement à la cinquième et sixième étape décrites ci-dessus, on emboîte un cache de protection 65 comportant un isolant thermique collé en face intérieure, tel qu'un cache de protection 65 prémuni d'une mousse isolante, sur le corps du au moins un raccord hydraulique 9, 11.

Ensuite dans une septième étape, on assemble le au moins un raccord hydraulique 9, 11 au boîtier 31. Le système de distribution 1 ainsi raccordé est fixe dans le véhicule automobile. Il suffit ensuite de raccorder les conduites secondaires des balais d'essuie-glace 13, 15 au au moins un raccord hydraulique 9, 11 et de raccorder électriquement les conducteurs chauffants 25, 27 de la conduite principale sous-capot 7 au connecteur électrique d'alimentation du boîtier 31.

Selon un deuxième mode de réalisation représenté par la figure 9, la bague thermo conductrice 55 est remplacée par un adaptateur conducteur chauffant comportant une languette thermo conductrice 57 présentant une paroi épousant la forme du corps du au moins un raccord hydraulique 9, 11. La languette thermo conductrice 57 est par exemple réalisée à partir d'une résine diffusant la chaleur.

Mieux visible sur la figure 10, la boucle chauffante 29 comprenant les conducteurs chauffants 25, 27 est enrobée dans la languette thermo conductrice 57. Ainsi la boucle chauffante 29 transfère de la chaleur à la languette de résine thermo conductrice 57. La languette thermo conductrice 57 est obtenue, par exemple par moulage de résine autour de la boucle chauffante 29. La forme de la languette thermo conductrice 57 est conçue de façon à épouser le corps du au moins un raccord hydraulique 9, 11. Par exemple, la languette thermo conductrice 57 peut être placée sur une face supérieure ou inférieure du raccord hydraulique.

On revient à présent à la figure 9 illustrant le deuxième mode de réalisation selon la variante bi rampe. La languette thermo conductrice 57 est insérée entre les deux faces 37, 39 en vis-à-vis des raccords hydrauliques 9, 11 au niveau de la zone de jonction 41. Des parois de la languette thermo conductrice 57 sont en contact avec les faces 37, 39. Dans cet exemple, il s'agit des parois supérieure et inférieure 75, 77 de la languette. Ainsi, la languette thermo conductrice 57 transfère la chaleur aux corps de raccord hydraulique 9, 11.

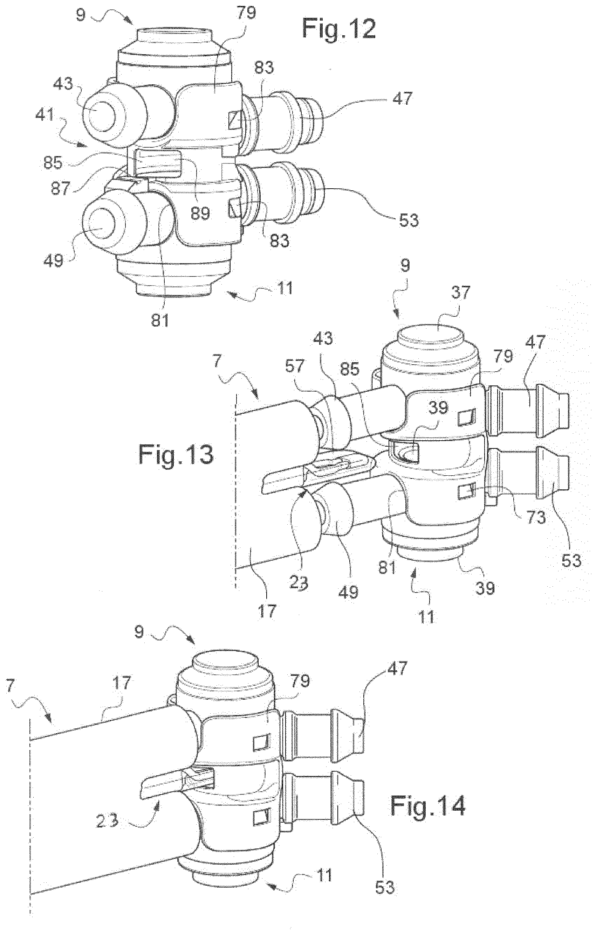

Sur l'exemple illustré, la jonction des deux raccords hydrauliques 9, 11 est assurée par un support 79. Le support 79 (figure 12) peut comporter des moyens de retenue coopérant par emboîtage élastique avec les corps des raccords hydrauliques 9, 11. Le support 79 comporte des ouvertures 81 pour le passage des entrées 43, 49 et sorties 45, 47, 51, 53 des raccords hydrauliques 9, 11. Par ailleurs, pour renforcer le maintien du support 79 sur les raccords hydrauliques 9, 11, le support 79 peut comporter des lumières 83 coopérant par emboîtage élastique avec les protubérances correspondantes 73 (visibles par exemple sur la figure 7b) des corps de raccords hydrauliques.

Le support 79 maintient les corps de raccords hydrauliques à une distance d (représenté sur la figure 9). Le support 79 comprend en outre une cavité centrale ouverte 85 (figure 12) située entre les deux corps de raccords hydrauliques 9, 11 au niveau de la zone de jonction 41. Cette cavité centrale 85 présente des ouvertures 87 permettant de découvrir les faces 37, 39 de raccord hydraulique 9, 11 et un orifice latéral 89 permettant d'ouvrir la cavité 85 vers l'extérieur. Comme visible sur la figure 9, la languette thermo conductrice 57 présente une section sensiblement complémentaire à celle de l'orifice latéral 89, ainsi la languette thermo conductrice 57 peut être insérée dans la cavité 85.

L'épaisseur e de la languette thermo conductrice 57 est sensiblement égale à la distance d entre les corps de raccord hydraulique 9, 11. De plus, la forme de la languette thermo conductrice 57 est sensiblement complémentaire à celles des faces 37, 39 de raccords hydrauliques 9, 11. Ainsi les parois 75, 77 de la languette sont en contact avec les corps de raccords hydrauliques 9, 11 au niveau de leurs faces 37, 39.

La languette thermo conductrice 57 permet ainsi une diffusion uniforme de la chaleur au niveau de la zone de jonction 41. Ainsi, on améliore le réchauffage des raccords hydrauliques 9, 11 en évitant la formation de points chauds qui pourraient les dégrader.En variante, la cavité 85 peut être remplie de résine ou colle thermo conductrice afin d'améliorer le transfert thermique entre la languette thermo conductrice 57 et les raccords hydrauliques 9, 11. Cette résine ou colle thermo conductrice peut être positionnée dans la cavité avant l'insertion de la languette thermo conductrice 57 ou être injectée après le positionnement de ladite languette 57.

Au cours du procédé d'assemblage du dispositif de chauffe selon un deuxième mode de réalisation 200 (figure 11), on peut réaliser la succession d'étapes suivantes.

Dans une première étape 201, on connecte ensemble les deux conducteurs chauffants 25, 27 s'étendant hors du manchon 17 à l'aide de shunts. Ainsi, on ferme électriquement le dispositif de chauffe 23 en réalisant ainsi la boucle conductrice chauffante 29.

Dans une deuxième étape 202 (figure 10), on enrobe la boucle conductrice chauffante 29 de manière à former la languette thermo conductrice 57.

Dans une troisième étape 203, selon la variante mono rampe, on dispose la languette thermo conductrice 57 contre le corps de raccord hydraulique 9 au moyen d'un support 79 spécifique et on raccorde le canal de circulation 19 de la conduite principale sous capot 7 au raccord hydraulique 9.

Selon la variante bi rampe, lors d'une troisième étape alternative 203 on assemble les raccords hydraulique 9, 11 grâce au support 79 (figure 12) en emboîtant le support 79 sur les parois latérales 33, 35 des corps de raccords hydrauliques 9, 11.

Puis, on insère la languette thermo conductrice 57 entre les raccords hydrauliques 9, 11, dans la cavité 85 du support 79 (figure 13) et on raccorde les canaux de circulation 19 ou 21 de la conduite principale sous capot 7 aux entrés 43 ou 49 des raccords hydrauliques 9 ou 11. Les parois 75, 77 de la languette épousent les faces 37, 39 des corps de raccords hydrauliques 9, 11 disposées en vis-à-vis. Le dispositif de chauffe 23 selon le deuxième mode de réalisation assemblé au système de distribution est représenté par la figure 14.

Puis dans une quatrième étape 204, on emboîte le cache de protection 65 sur le corps du au moins un raccord hydraulique, les entrées 43, 49 et sorties 45, 47, 51, 53 du au moins un raccord hydraulique 9, 11 étant glissées dans les ouvertures 81.

Enfin, dans une cinquième étape 205, on assemble le au moins un raccord hydraulique 9, 11 au boîtier 31. Le dispositif de distribution 1 ainsi raccordé est fixe dans le véhicule automobile. Il suffit ensuite de raccorder les conduites secondaires des balais d'essuie-glace 13, 15 au au moins un raccord hydraulique 9, 11 et de raccorder électriquement les conducteurs chauffants 25, 27 de la conduite principale sous-capot 7 au connecteur électrique d'alimentation du boîtier 31.

En variante, le cache de protection 65 peut être positionné après la fixation du au moins un raccord hydraulique 9, 11 au boîtier 31.

Ce procédé d'assemblage est simple et rapide à mettre en œuvre.

Bien évidemment, selon une variante non représentée, les conducteurs chauffants 25, 27 formant la boucle conductrice chauffante 29 peuvent être noyés dans l'une des conduites secondaires de balai d'essuie-glace 13 et 15.

On comprend donc qu'un dispositif de chauffe 23 comprenant un adaptateur thermo conducteur 55, 57 tel qu'une bague thermo conductrice 55 ou une languette thermo conductrice 57 en contact d'une part avec la boucle chauffante 29 et d'autre part avec le au moins un raccord hydraulique 9, 11 permet un assemblage simple et rapide du dispositif de chauffe 23 au système de distribution de liquide lave-glace 1.

De plus, l'adaptateur thermo conducteur 55, 57 comprend une portion de paroi 75, 77 épousant la forme du au moins un raccord hydraulique 9, 11, ce qui permet d'améliorer le réchauffage et maintenir la zone de jonction entre la conduite primaire et les conduites secondaires hors gel. Cette amélioration est due, d'une part à un transfert thermique efficace, et d'autre part à un transfert thermique uniformisé ce qui permet d'éviter la formation de points chauds qui pourraient endommager le au moins un raccord hydraulique 9, 11.

Bien évidemment, l'adaptateur conducteur chauffant utilisé, qui peut être comme décrit ci-dessus une bague thermo conductrice 55 ou une languette thermo conductrice 57 n'est pas nécessairement en contact avec le au moins un raccord hydraulique 9, 11. Toutefois, l'adaptateur conducteur chauffant utilisé doit être à une distance adaptée de manière à transmettre au moins une partie de la chaleur dudit adaptateur audit au moins un raccord hydraulique 9, 11. De préférence, cette distance est de 0 à 5 millimètres, et selon une variante préférée, la distance est de 0 à 1 millimètre. Cet agencement est particulièrement avantageux lors de l'utilisation d'un cache permettant d'isoler l'adaptateur conducteur chauffant de l'environnement extérieur.

## Revendications

1. Système de distribution de liquide lave-glace (1) pour balais d'essuie-glace (3, 5) de véhicule automobile comprenant :
- au moins un conduit (19, 21) de circulation du liquide,
- au moins un élément chauffant (25, 27) s'étendant le long dudit conduit, l'élément chauffant comprenant deux conducteurs chauffants (25, 27) distincts connectés l'un à l'autre de manière à former une boucle conductrice chauffante (29),
- au moins un raccord hydraulique (9, 11) connecté hydrauliquement audit conduit, un adaptateur thermo conducteur (55, 57) en contact avec ledit élément chauffant (25, 27) et disposé à une distance adaptée pour transmettre au moins une partie de la chaleur dudit adaptateur audit raccord hydraulique (9, 11),
**caractérisé en ce que** l'adaptateur thermo conducteur (55, 57) comprend une bague thermo conductrice (55) autour de laquelle est enroulée la boucle chauffante (29) ou **en ce que** l'adaptateur thermo conducteur (55, 57) comprend une languette thermo conductrice (57) enrobant la boucle conductrice chauffante (29).

2. Système de distribution de liquide selon la revendication 1, **caractérisé en ce que** ladite distance entre l'adaptateur thermo conducteur (55, 57) et le raccord hydraulique (9, 11) est de 0 à 5 millimètres, et est, de préférence, de 0 à 1 millimètre.

3. Système de distribution de liquide selon la revendication 1 ou 2, **caractérisé en ce que** l'adaptateur thermo conducteur (55, 57) comprend une portion de paroi (75, 77) épousant au moins une partie du corps dudit raccord hydraulique (9, 11).

4. Système de distribution de liquide selon l'une quelconque des revendications précédentes, **caractérisé en ce que** les deux conducteurs chauffants (25, 27) sont en partie noyés dans la masse formant ledit conduit (19, 21) de circulation, ladite boucle conductrice chauffante (29) s'étendant hors dudit conduit (19, 21).

5. Système de distribution de liquide selon l'une quelconque des revendications précédentes, **caractérisé en ce que** la bague thermo conductrice (55) est recouverte par un joint isolant (63) au moins autour de la boucle chauffante (29).

6. Système de distribution de liquide selon l'une quelconque des revendications 1 à 4, **caractérisé en ce que** la languette thermo conductrice (57) est réalisée à partir de résine thermo conductrice.

7. Système de distribution de liquide selon l'une quelconque des revendications précédentes, **caractérisé en ce qu'**un cache de protection (65) recouvre l'adaptateur thermo conducteur (55, 57) ainsi qu'une paroi latérale (33, 35) du raccord hydraulique (9, 11).

8. Système de distribution de liquide selon l'une quelconque des revendications précédentes, **caractérisé en ce que** le système de distribution comporte deux raccords hydrauliques (9, 11).

9. Système de distribution de liquide selon la revendication 8, **caractérisé en ce que** l'adaptateur thermo conducteur (55, 57) est disposé au niveau d'une zone de jonction (41) des deux raccords hydrauliques (9,11).

10. Système de distribution de liquide selon la revendication 8 ou 9, **caractérisé en ce que** la bague thermo conductrice (55) est emboîtée sur les corps des deux raccords hydrauliques (9, 11) au niveau de la zone de jonction (41).

11. Système de distribution de liquide selon la revendication 8 ou 9, **caractérisé en ce qu'**un support (79) relie les deux raccords hydrauliques (9, 11) et **en ce que** la languette thermo conductrice (57) est insérée entre les corps des deux raccords hydrauliques (9, 11) au niveau de la zone de jonction (41) dans une cavité (85) dudit support (79).

12. Système de distribution de liquide selon l'une des revendications précédentes, **caractérisé en ce que** le raccord hydraulique (9, 11) comprend un clapet anti-retour.

## Patentansprüche

1. System zur Verteilung einer Waschflüssigkeit (1) für Scheibenwischer (3, 5) eines Kraftfahrzeugs, das Folgendes beinhaltet:
- mindestens eine Leitung (19, 21) zum Zirkulieren der Flüssigkeit,
- mindestens ein Heizelement (25, 27), das sich entlang der Leitung erstreckt, wobei das Heizelement zwei voneinander getrennte Heizleiter (25, 27) beinhaltet, die miteinander verbunden sind, um eine leitende Heizschleife (29) zu bilden,
- mindestens einen Hydraulikanschluss (9, 11), der mit der Leitung hydraulisch verbunden ist, wobei ein wärmeleitender Adapter (55, 57) mit dem Heizelement (25, 27) in Kontakt ist und in einem angemessenen Abstand angeordnet ist, um mindestens einen Teil der Wärme des Adapters an den Hydraulikanschluss (9, 11) zu übertragen, **dadurch gekennzeichnet, dass** der wärmeleitende Adapter (55, 57) einen wärmeleitenden Ring (55) beinhaltet, um den die Heizschleife (29) gewickelt ist, oder dass der wärmeleitende Adapter (55, 57) eine wärmeleitende Zunge (57) beinhaltet, die die leitende Heizschleife (29) umschließt.

2. Flüssigkeitsverteilungssystem nach Anspruch 1, **dadurch gekennzeichnet, dass** der Abstand zwischen dem wärmeleitenden Adapter (55, 57) und dem Hydraulikanschluss (9, 11) 0 bis 5 Millimeter beträgt und vorzugsweise 0 bis 1 Millimeter beträgt.

3. Flüssigkeitsverteilungssystem nach Anspruch 1 oder 2, **dadurch gekennzeichnet, dass** der wärmeleitende Adapter (55, 57) einen Wandabschnitt (75, 77) beinhaltet, der mindestens an einem Teil des Körpers des Hydraulikanschlusses (9, 11) anliegt.

4. Flüssigkeitsverteilungssystem nach einem der vorhergehenden Ansprüche, **dadurch gekennzeichnet, dass** die zwei Heizleiter (25, 27) teilweise in die Masse, die die Zirkulationsleitung (19, 21) bildet, eingebettet sind, wobei sich die leitende Heizschleife (29) außerhalb der Leitung (19, 21) erstreckt.

5. Flüssigkeitsverteilungssystem nach einem der vorhergehenden Ansprüche, **dadurch gekennzeichnet, dass** der wärmeleitende Ring (55) mindestens um die Heizschleife herum (29) durch ein Isolierstück (63) abgedeckt ist.

6. Flüssigkeitsverteilungssystem nach einem der Ansprüche 1 bis 4, **dadurch gekennzeichnet, dass** die wärmeleitende Zunge (57) aus einem wärmeleitenden Harz hergestellt ist.

7. Flüssigkeitsverteilungssystem nach einem der vorhergehenden Ansprüche, **dadurch gekennzeichnet, dass** eine Schutzabdeckung (65) den wärmeleitenden Adapter (55, 57) sowie eine Seitenwand (33, 35) des Hydraulikanschlusses (9, 11) abdeckt.

8. Flüssigkeitsverteilungssystem nach einem der vorhergehenden Ansprüche, **dadurch gekennzeichnet, dass** das Verteilungssystem zwei Hydraulikanschlüsse (9, 11) umfasst.

9. Flüssigkeitsverteilungssystem nach Anspruch 8, **dadurch gekennzeichnet, dass** der wärmeleitende Adapter (55, 57) im Bereich einer Verbindungszone (41) der zwei Hydraulikanschlüsse (9, 11) angeordnet ist.

10. Flüssigkeitsverteilungssystem nach Anspruch 8 oder 9, **dadurch gekennzeichnet, dass** der wärmeleitende Ring (55) im Bereich der Verbindungszone (41) an den Körpern der zwei Hydraulikanschlüsse (9, 11) angebracht ist.

11. Flüssigkeitsverteilungssystem nach Anspruch 8 oder 9, **dadurch gekennzeichnet, dass** die zwei Hydraulikanschlüsse (9, 11) durch einen Träger (79) verbunden sind und dass die wärmeleitende Zunge (57) im Bereich der Verbindungszone (41) zwischen den Körpern der zwei Hydraulikanschlüsse (9, 11) in einen Hohlraum (85) des Trägers (79) eingeschoben ist.

12. Flüssigkeitsverteilungssystem nach einem der vorhergehenden Ansprüche, **dadurch gekennzeichnet, dass** der Hydraulikanschluss (9, 11) ein Rückschlagventil beinhaltet.

## Claims

1. A system for distributing washer fluid (1) for motor vehicle windscreen wipers (3, 5) including:
- at least one fluid circulation pipe (19, 21),
- at least one heating element (25, 27) extending along said pipe, the heating element including two separate heating conductors (25, 27) connected to one another such as to form a conductive heating loop (29),
- at least one hydraulic connection (9, 11) connected hydraulically to said pipe,
a heat-conducting adapter (55, 57) in contact with said heating element (25, 27) and arranged at a suitable distance to transmit at least some of the heat from said adapter to said hydraulic connection (9, 11), **characterized in that** the heat-conducting adapter (55, 57) is a heat-conducting ring (55) about which the heating loop (29) is wound or **in that** the heat-conducting adapter (55, 57) is a heat-conducting tab (57) wrapped around the conductive heating loop (29).

2. The fluid distribution system as claimed in claim 1, **characterized in that** said distance between the heat-conducting adapter (55, 57) and the hydraulic connection (9, 11) is between 0 and 5 millimeters, and is preferably between 0 and 1 millimeter.

3. The fluid distribution system as claimed in claim 1 or 2, **characterized in that** the heat-conducting adapter (55, 57) includes a wall portion (75, 77) fitting at least one portion of the body of said hydraulic connection (9, 11).

4. The fluid distribution system as claimed in any one of the preceding claims, **characterized in that** the two heating conductors (25, 27) are partially embedded in the mass forming said circulation pipe (19, 21), said conductive heating loop (29) extending outside said pipe (19, 21) .

5. The fluid distribution system as claimed in any one of the preceding claims, **characterized in that** the heat-conducting ring (55) is covered by an insulating joint (63) at least about the heating loop (29).

6. The fluid distribution system as claimed in any one of the preceding claims 1-4, **characterized in that** the heat-conducting tab (57) is made of a heat-conducting resin.

7. The fluid distribution system as claimed in any one of the preceding claims, **characterized in that** a protective mask (65) covers the heat-conducting adapter (55, 57) as well as a side wall (33, 35) of the hydraulic connection (9, 11).

8. The fluid distribution system as claimed in any one of the preceding claims, **characterized in that** the distribution system includes two hydraulic connections (9, 11) .

9. The fluid distribution system as claimed in claim 8, **characterized in that** the heat-conducting adapter (55, 57) is arranged at the junction zone (41) of the two hydraulic connections (9, 11).

10. The fluid distribution system as claimed in claim 8 or 9, **characterized in that** the heat-conducting ring (55) is fitted into the body of the two hydraulic connections (9, 11) at the junction zone (41).

11. The fluid distribution system as claimed in claim 8 or 9, **characterized in that** a supporting element (79) connects the two hydraulic connections (9, 11) and **in that** the heat-conducting tab (57) is inserted between the bodies of the two hydraulic connections (9, 11) at the junction zone (41) in a cavity (85) in said supporting element (79).

12. The fluid distribution system as claimed in one of the preceding claims, **characterized in that** the hydraulic connection (9, 11) includes a check valve.
